# EUROPEAN PATENT SPECIFICATION

(11) **EP 1 922 681 B1**
(45) Date of publication and mention of the grant of the patent: **03.04.2013**
(21) Application number: 06779120.2
(22) Date of filing: 11.08.2006
(51) Int. Cl.: H04M 15/00, H04W 4/24, G06Q 20/12, G06Q 20/32

(54) **MOBILE ACCOUNT MANAGEMENT**
MOBIL-ACCOUNT-VERWALTUNG
GESTION DE COMPTE MOBILE

(30) Priority: 12.08.2005 GB 0516616
(43) Date of publication of application: 21.05.2008
(73) Proprietor: Vodafone Group PLC, Newbury Berkshire RG14 2FN (GB)
(72) Inventor: MURDOCH, Timothy, Norton, Sherard, Cambridge CB2 5GG (GB); BOWLEY, Christopher, Cambridge CB2 5GG (GB); VAUGHAN, Lesley-Ann, Cambridge CB2 5GG (GB); CAREW, Warren, Douglas, Cambridge CB2 5GG (GB); HUGHES, Nick, Berkshire RG14 2FN (GB); LONIE, Susie, Berkshire RG14 2FN (GB)
(74) Representative: Keston, David Arthur
(86) International application number: PCT/GB2006/002997
(87) International publication number: WO 2007/020394

(56) References cited:
- EP-A- 1 510 983
- WO-A-2004/036513
- WO-A-2005/004069
- WO-A2-00/67177
- WO-A2-2004/019151
- GB-A- 2 372 615
- LAWTON G: "BIOMETRICS: A NEW ERA IN SECURITY" COMPUTER, IEEE SERVICE CENTER, LOS ALAMITOS, CA, US, vol. 31, no. 8, August 1998 (1998-08), pages 16-18, XP000780511 ISSN: 0018-9162

## Description

The invention relates to the management of secure transactions in a wireless communications network. In particular, the invention relates to the secure transfer of messages representing the exchange of title to monetary assets.

A large proportion of the world's population is not served by conventional banking facilities. There are limited facilities for transferring money between 'enterprises' (e.g. business to business) or between individuals (one location to another). Consequently, cash must often physically change hands. This lack of banking facilities affects small-scale business men and women in emerging markets particularly strongly.

How such small-scale business people access funding, referred to as "microcredit" or "microfinance", is seen as being central to stimulating economic activity in emerging markets.

The availability of financial services (such as microcredit/microfinance) is constrained by the infrastructure in place to deliver it, making existing systems slow, costly and where cash is involved, often insecure.

In many emerging economies, the cellular network provides the platform on which financial services can be delivered, far exceeding the reach of landlines, bank branches and automated teller machines (ATMs) which are largely restricted to urban areas. For this reason, a number of systems have been implemented using the conventional short message functionality (SMS) of cellular networks in an attempt to address customer need - giving access to financial services using the mobile networks and phones as delivery channels.

In one known system, Fundamo Elevator deployed in Zambia as CelPay, targeting high end customers and based on SIM protocol. Registered customers are provided with a CelPay SIM card. The SIM card is programmed to generate a new menu once inserted into a suitable mobile telephone handset. Celpay accounts are credited either via a transfer from a conventional bank account, or by directly depositing cash or cheque into a Celpay partner bank. When the CelPay user wishes to make a payment, he uses the CelPay menu on his handset to input the amount to be paid to the merchant or supplier. He is prompted to authenticate the transaction by inputting a secure Personal Identification Number (PIN). Both payer and payee receive confirmation of the transaction (in the form of an SMS message). Since each transaction has a unique reference number, with full details available online (on the World Wide Web, the "Web"), the merchant or supplier (provided he has access to the Web) has a complete online audit record of who paid what, and when. The merchant or supplier must also have set up a special Celpay-enabled account into which any transfers will be made. Funds can then be swept to the main bank account for the merchant on the merchant's instruction.

Another system, Globe G-Cash in the Philippines, uses SMS notification in relation to conventional "straight money transfer" person to person via outlet agents. A G-Cash account is provided for each registered user. SMS messages requesting payment in G-Cash to recipient accounts are sent to a short code number (a central service) for processing (e.g. to pay a bill or to buy call credit).

Smart Money, also implemented in the Philippines, uses 'smart credits' as electronic payments. The Smart Money application makes use of an electronic-wallet card that is linked to a mobile phone account. The card can be used like a debit card. Alternatively, using mobile phones, customers *with bank accounts* can, via SMS, load money onto the card, transfer money between cards, track transactions, pay bills etc.

Another well-known mechanism for money transfer in the absence of banking facilities is the facility to "wire" cash in the form of international remittances, provided by companies such as Western Union.

Existing systems have met with some success. They do however rely on customers having access to a conventional infrastructure such as a bank account, the Web and/or a suitable outlet. This excludes many small businesspeople, for whom access to such basic infrastructure is a considerable burden.

In order to overcome the preceding difficulties, there is provided a mobile-phone enabled account management system for maintaining a plurality of virtual accounts in a cellular communications system, the cellular communications system carrying messages between mobile terminals and each mobile terminal including a data card with a unique identifier, the account management system including:
a messaging means which is adapted to receive incoming transaction messages from mobile terminals using the communications system, the incoming messages including the unique identifier of the originating mobile terminal, and transmitting outgoing transaction messages to mobile terminals in response;
a transaction processor which is coupled to the messaging means via a pair of message queues and adapted to interpret incoming transaction messages and to output corresponding transaction instructions;
a message security means, coupled to the transaction processor, which authenticates the incoming transaction messages by comparing the included unique identifier to the entries in a list of valid virtual accounts; and
a transaction data store interface, coupled to the transaction processor, through which the transaction processor communicates with a data store, the interface being adapted to convey instructions to amend data held in one or more valid virtual accounts stored in the data store and to convey transaction complete messages from the data store to the transaction processor when the amendment is complete;
wherein the message queues include a receive queue and a send queue, the receive queue being adapted to queue messages received from the transaction processor and the send queue being adapted to queue messages sent to the transaction processor;
wherein the transaction processor is also adapted to interpret transaction complete messages and to output corresponding interpreted transaction complete messages to the messaging means via the receive queue;
wherein each interpreted transaction complete message includes security information generated from unique identifiers of amended virtual accounts, the messaging means directing outgoing messages generated from the interpreted transaction complete messages to corresponding mobile terminals; and
wherein each received outgoing message is in a format which requires the input of a unique key from the data card inserted in the mobile terminal, thereby ensuring that the outgoing message can only be read in the presence of a data card with a unique key that matches the security information in the outgoing message.

The account management system is thus a mobile phone-enabled account management platform. This system has the functionality to allow users to move money at both at a business-to-business level and at a person-to-person level, via mobile terminals (in particular, through the use of widely-available GSM mobile phones). The system makes use of specially developed software running on a mobile phone's SIM card to conduct the conversation with the end user and uses short message service (SMS) to communicate between the SIM card and a central server. This has the advantage of being able to run on low specification mobile phones that do not necessarily support GPRS.

In accordance with a further aspect of the invention, there is provided a mobile-phone enabled method for maintaining a plurality of virtual accounts in a cellular communications system, the cellular communications system carrying messages between mobile terminals and each mobile terminal including a data card with a unique identifier, the method comprising:
receiving incoming transaction messages from mobile terminals using the communications system, the incoming messages including the unique identifier of the originating mobile terminal;
queuing the incoming messages;
interpreting incoming transaction messages;
authenticating the incoming transaction messages by comparing the included unique identifier to the entries in a list of valid virtual accounts;
where the incoming transaction messages is authentic, outputting corresponding transaction instructions to amend data held in one or more valid virtual accounts stored in a data store;
receiving transaction complete messages from the data store when the amendment is complete;
queuing transaction complete messages; and
transmitting outgoing transaction messages to the originating mobile terminals, each interpreted transaction complete message including security information generated from unique identifiers of amended virtual accounts;
wherein each received outgoing message is in a format which requires the input of a unique key from the data card inserted in the mobile terminal, thereby ensuring that the outgoing message can only be read in the presence of a data card with a unique key that matches the security information in the outgoing message.

By creating a series of virtual accounts within a standard deposit account operated on behalf of individual customers and organisations such as, microfmance institutions (MFI), the platform enables individual users, service providers and agents to move 'allocated funds' between these virtual accounts by instructing the account manager to do so, for example via SMS.

Once an individual has been given a virtual account, money can be allocated to this (for example by a microfinance service provider). Value can be moved between accounts within the virtual account system when instructions are received by SMS, say. For example, an individual can request value to be moved between his virtual account and the corresponding virtual account of a merchant from which he is buying goods or services.

The value represented by the virtual account can be encashed at any suitable registered agent, such as an airtime reseller or any location that has suitable 'cash flow' (shops, petrol stations, etc). These agents are much more widespread and convenient to access than bank outlets. The process is quick and transaction costs should be lowered substantially. In particular, this arrangement also obviates the need for the physical movement (and (re)counting) of 'cash' and so offers security benefits for the user.

Using mobile technology to make financial transactions faster, cheaper, and more secure, facilitates the delivery of financial services in emerging markets where other financial transaction mechanisms are unattractive. The invention also facilitates the wider transfer of money between migrant workers and their families.

Preferably, the platform is provided with a security layer. The security layer may be implemented at each stage of a transaction. This layer is built into the Account Manager to protect against fraudulent use.

The security of the exchange of information between individual users, service providers and agents (i.e. a handset with an appropriate SIM installed), on the one hand, and the account manager, on the other, may be enhanced by requiring encryption of the message (e.g. SMS message) using a key that is shared between both parties. To effect this shared key encryption, the SIM used in the handset may be provided with a SIM Toolkit (STK) application for encrypting and decrypting such messages.

Alternatively, or additionally, security may be provided using other ID and security checks independent of the SIM or handset. Examples of such alternate checks include: Personal Identification Numbers (PINs); username/password combinations; biometric parameters (such as iris scans, fingerprinting, voice pattern recognition etc.). These checks may use existing functionalities on the handset (i.e. key pad and microphone) to obtain data for processing at a secure server: thus, interactive voice response (IVR) or Voice Recognition may be used to obtain secure information from the user. One advantage of this is that a handset and a single SIM can be shared by a whole community of users, similar to a point of sales device: user accounts can be distinguished by requiring the input of further ID and security information.

Preferably, there is also provided a reporting means for providing a reporting functionality that allows movement of value between the virtual accounts to be tracked. The reporting means may further track encashment. The reporting means thereby provides an audit trail as may be required by regulatory authorities.

For a better understanding of the present invention an embodiment will now be described by way of example, with reference to the accompanying drawings, in which:
Figure 1 shows schematically a network in which the invention may be used;
Figure 2 is a diagrammatic drawing of a microfinance system incorporating a virtual account management system in accordance with the present invention;
Figure 3 shows the information flow in the system of Figure 2; and
Figure 4 illustrates the some of the microfinance transactions facilitated by present invention; and
Figure 5 illustrates the operation of a message forwarder utility for overcoming firewall restrictions.

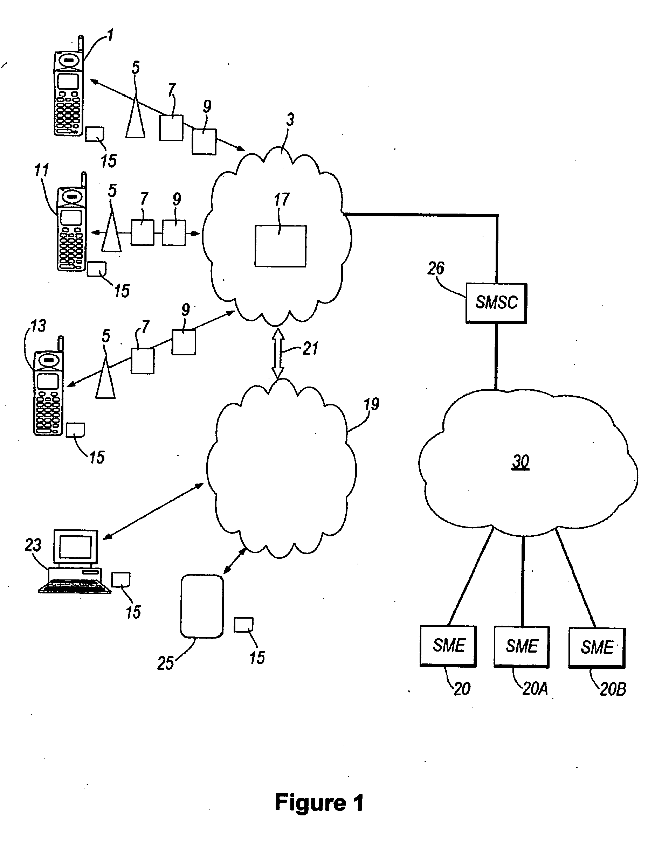

Figure 1 shows schematically a network in which the invention may be used. The figure shows a cellular network. However, it should be appreciated that the invention is applicable to any type of network, although it is particularly applicable to a network where at least some of the devices communicate using mobile telecommunications/wireless data transmission. Mobile terminal 1 is registered with GSM/GPRS or UMTS (3G) mobile telecommunications network 3. The mobile terminal 1 may be a handheld mobile telephone, a personal digital assistant (PDA) or a laptop computer equipped with a datacard. The mobile terminal 1 communicates wirelessly with mobile telecommunications network 3 via the radio access network (RAN) of the mobile telecommunications network 3, comprising, in the case of a UMTS network, base station (Node B) 5, and radio network controller (RNC) 7. Communications between the mobile terminal 1 and the mobile telecommunications network 3 are routed from the radio access network via GPRS support nodes (SGSN) 9, which may be connected by a fixed (cable) link to the mobile telecommunications network 3.

In the conventional manner, a multiplicity of other mobile terminals is registered with the mobile telecommunications network 3. These mobile terminals include mobile terminals 11 and 13. The terminals 11 and 13 communicate with the mobile telecommunications network 3 in a similar manner to the terminal 1, that is via an appropriate Node B 5, RNC 7 and SGSN 9.

The mobile telecommunications network 3 includes a gateway GPRS support node (GGSN) 17 which enables IP-based communications with other networks, such as the Internet 19 via an appropriate link 21. A multiplicity of terminals are connected to the Internet (by fixed or wireless links), and a PC terminal 23 and a PDA terminal 25 are shown by way of example.

Each of the mobile terminals 1, 11 and 13 is provided with a respective subscriber identity module (SIM) 15. During the manufacturing process of each SIM, authentication information is stored thereon under the control of the mobile telecommunications network 3. The mobile telecommunications network 3 itself stores details of each of the SIMs issued under its control. In operation of the mobile telecommunications network 3, a terminal 1, 11, 13 is authenticated (for example, when the user activates the terminal in the network with a view to making or receiving calls) by the network sending a challenge to the terminal 1,11,13 incorporating a SIM 15, in response to which the SIM 15 calculates a reply (dependent on the predetermined information held on the SIM - typically an authentication algorithm and a unique key Ki) and transmits it back to the mobile telecommunications network 3. The mobile telecommunications network 3 includes an authentication processor 17 which generates the challenge and which receives the reply from the terminal 1, 11, 13.

Using information pre-stored concerning the content of the relevant SIM 15, the authentication processor calculates the expected value of the reply from the mobile terminal 1, 11, 13. If the reply received matches the expected calculated reply, the SIM 15 and the associated mobile terminal are considered to be authenticated.

It should be understood that such an authentication process can be performed for any terminal provided with a SIM 15 under control of the mobile telecommunications network 3. In the embodiment the terminal communicates wirelessly with the mobile telecommunications network 3 via the network's radio access network, although this is not essential. For example, the terminal may communicate with the network via the fixed telephone network (PSTN), via a UMA "access point" and/or via the Internet. The PC 23 and the PDA 25 may also be provided with a SIM 15 under the control of the network.

The SIM 15 used by the terminal 1,11,13,23,25 may be a SIM of the type defined in the GSM or UMTS standards specifications, or may be a simulation of a SIM - that is, software or hardware that performs a function corresponding to that of the SIM. The SIM may be in accordance with the arrangement described in WO-A-2004 036513.

It should be noted that the authentication process being described does not necessarily authenticate the human identity of the user. For example, mobile telecommunication networks have pre-pay subscribers who are issued with SIMs in return for pre-payment, enabling them to use network services. However, the identity of such pre-pay subscribers may not be known by the network. Nevertheless, such a user cannot make use of the network until the network has authenticated the user's SIM - that is, has confirmed that such user is a particular user who has a particular pre-paid account with a network.

The network shown in Figure 1 comprises both the mobile telecommunications network 3 and the Internet 19 (which itself comprises a multiplicity of other networks).

The procedure for transmission of "short messages" is different. The term "short messages" or "SMS messages" as used in relation to the embodiments means short messages as defined in the GSM or 3G standard specifications. Such messages are commonly in the form of text messages of limited maximum length, but they can have other forms, such as in the form of binary data, or may contain configuration data for changing the functional parameters of a mobile. The invention is not limited to the transmission of messages of this "short message" type.

Short messages may be sent to or from mobiles such as the mobiles 1,11,13 and the others belonging to the network 3. However, in addition, short messages may be sent to or from "short message entities" (SMEs) such as shown at 20,20A,20B. These SMEs may be in the form of terminals of various sorts such as fixed terminals for sending short messages of various types to mobiles and for receiving short messages from mobiles. For example, the SMEs may be in the form of terminals associated with banking computers or computers of other types generating information (commercial information, for example) for transmission to mobiles and for receiving short messages in response from mobiles, but may be of many other types, such as application servers of various types.

The network 3 has a short message service centre (SMSC) 26 associated with it. The SMEs 20,20A,20B are connected to the SMSC 26 by fixed networks 30 of suitable type. When a mobile wishes to send a short message, it will do this via the SMSC 26 of its network 3. Thus, for example, if the mobile 1 wishes to send a short message to mobile 11, the short message is automatically addressed by the mobile 11 to SMSC 26, which then delivers the short message to mobile 11 (after registering the necessary details to enable a charge to be made to mobile 1). Each short message therefore carries the address of the local SMSC (this address is automatically generated by the sender), together with the address of the intended destination of the short message. When the local SMSC receives the short message, it then reads the address (the MSISDN or Mobile Station ISDN number or telephone number of the intended destination) and despatches the short message accordingly.

The SMS messages may be secured and authenticated in accordance with the arrangement described in co-pending patent application publication No. GB-A-2415574.

In a basic embodiment, the invention allows the straightforward transfer of value between customers, where each customer has a respective virtual account provided on the platform. In accordance with the invention, account transactions are conducted wholly over a telecommunications network (for instance a GSM network). An exchange of SMS transaction messages causes the transfer of funds between one customer account and another customer account, each account being managed by the account management system, thereby allowing money to be sent home or up country without the security risks normally involved with such activities. Furthermore, the customers only require a SIM card to be able to operate such virtual accounts, the SIM card being inserted in a suitable terminal (generally a mobile phone handset) in order to connect to the telecommunication network.

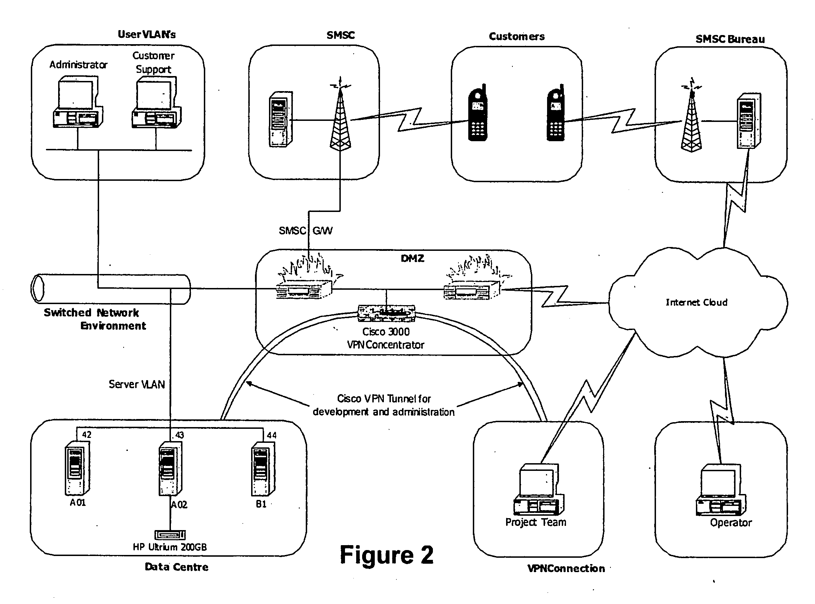

Figure 2 illustrates the interactions between "actors" in a microfinance system. A virtual account management system in accordance with the present invention may be installed in the Data Centre such that customers and operators can access the facilities either through mobile telephone handsets or over a network link (either leased line or internet).

Each customer's virtual account has an associated SIM inbox within which recent transactions are preferably stored, thereby representing the current balance of the virtual account.

Provision is made for the administration of the switched network environment, for customer support and for the maintenance of the data stored in the data centre. Where necessary, a virtual private network (VPN) is established using a VPN concentrator (for example the Cisco 3000). The VPN concentrator allows the creation of a VPN tunnel for the development and administration of the data stored on the data centre remotely. In particular, the provision of a VPN facilitates access by individual organisational partners/customers (eg. microfinance institutions (MFIs), Airtime Dealerships acting as Agents) to their core accounts using an internet connection.

As an alternative to the direction of transaction SMS messages to a SMSC coupled to the wired network, SMS transaction messages may also be directed to an SMSC bureau which routes SMS messages as packets through the internet (as, for example, e-mail under the SNMP, Simple Network Mail protocol).

In addition or as an alternative to the provision of a mobile handset SMS-based interface, the virtual account management system may optionally be accessed via one or more channels within a range of complimentary channels including the Web, GPRS, Unstructured Supplementary Service Data (USSD), and Voice.

In addition to transfer of value between virtual accounts, SMS transaction messages are used to withdraw and deposit cash in a process facilitated by the provision of an Agent account. Approved agents of the account management system, such as telephone credit resellers (or shop owners), are provided with further menu facilities to allow them to verify the withdrawal and/or deposition of physical cash with the agent.

Alternatively, or additionally, the client may buy goods directly without the use of physical cash by transferring funds to a Merchant account. Again the merchant account is a virtual account management system account provided to merchants to allow the sale of goods and services in return for fund transfer from a client account to the merchant.

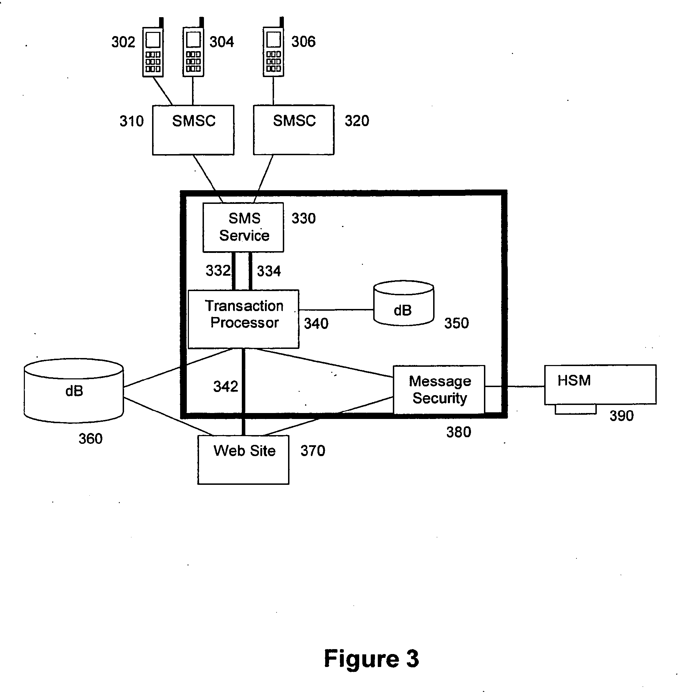

A typical transaction may be illustrated by referring to the elements of Figure 3. A mobile phone user initiates the transaction by navigating through menus displayed on the screen of his mobile phone 302 to a funds transaction application on the SIM card (installed in the phone 302). Similarly, other users also carry out transactions on the system using their mobile phones 304,306. The user then chooses the appropriate transaction from a funds transaction application menu and enters the requested information such as destination account, amount, PIN, etc. The information is packaged into an encrypted message and then sent via SMS to a Transaction Processor 340. To get to the Transaction Processor 340, the encrypted message must first pass through the network operator's short message service centre - SMSC, 310 and an SMS service module 330. The connection from the mobile phones to the SMSC is made over the mobile network.

The thick lines in Fig 3 represent Message Queues (MQ). MQs can work across computers and allows the two entities at either end to work independently. One entity submits a message, without waiting for a reply, and the other receives and processes it at a later time. For example, the SMS service module 330 can continue to receive SMS messages and relay them to a queue while the Transaction Processor 340 is temporarily turned off for maintenance.

The Transaction Processor 340 is triggered by events such as the arrival of an incoming message or delivery notification, notification of SMSC acceptance of an outgoing message, timer expiration or external request. It determines the correct response to the event and carries it out.

As Figure 3 illustrates, the Transaction Processor 340 can connect simultaneously to more than one SMSC 310,320. This allows for differences in the functionality of different SMSCs. The architecture also allows for multiple SMS Services 330, potentially spread across a plurality of host computers 300, with each SMS Service 330 connected to one or more SMSCs. It also allows for multiple Transaction Processors 340 for scalability.

The Transaction Processor 340 is responsible for accepting incoming requests of different types and handling them through to completion. Each incoming request initiates a new transaction. Before completing, the new transaction may involve one or more steps over a period of time (in some cases, as long as 45 minutes). Consider, for example, a customer initiating a Send Money transaction. When the Transaction Processor 340 receives the request message the Processor verifies the message, queries the main database 350 and, if successful, sends a reply to the customer's mobile phone 302 confirming that the transaction has taken place. Some seconds or minutes later the Transaction Processor 340 receives confirmation of delivery of the reply, confirms the transaction to the transaction database 350 and sends a notification to the recipient.

Often multiple events are grouped together into a single transaction. For example, when a funds transaction-capable SIM is first activated, an SMS message is sent from the SIM to the Transaction Processor 340. The Transaction Processor 340 decrypts and decodes the incoming message to discover that it is an activation request and that it includes the correct PIN for that phone number.

It passes the request on to the Accounting Database 360 and if it approves the activation, passes back an initial menu in several SMS messages, via the SMSC 310 and SMS service module 330. This is delivered as a binary SMS to the SIM Application itself. When successful delivery acknowledgements have arrived for all the SMS messages, the Transaction Processor 340 sends a further, text SMS message to the phone 302 containing the, now activated, SIM telling the user that activation was successful. All these events - the initial message, the notification from the SMSC 310 of the acceptance of the initial menu messages and each of the delivery notifications are grouped together by the Transaction Processor 340 as a single application-level transaction.

In a preferred implementation, the Transaction Processor 340 makes extensive use of the Microsoft [RTM] Enterprise Library, the transactions being MS-DTC level transactions and the incoming events being communicated by means of MSMQ messages. In this case, the Transaction Processor 340 is arranged to ensure that everything from reading a message from a queue, the resulting database processing and any sent messages are all covered by a single, respective, MS-DTC transaction. Therefore, should any error occur during processing, all the work is undone by a single rollback and can be re-started: as a result this implementation is able to cope with database deadlocks.

The Transaction Processor 340 is preferably adapted to nest transactions: using an outer transaction to obtain the next event and an inner transaction to process it. If the inner transaction fails the outer one is preferably allowed to proceed on the grounds that having it fail merely causes the event to be read again and the same error to occur. Only if the inner transaction results in a retryable error does the outer one fail. There is a mechanism for limiting the number of such retries.

The Message Security component 380 is responsible for encrypting and decrypting messages sent between the SIM application (not shown, resident on the user's mobile phone 302) and the Transaction Processor 340. As part of the decoding PINs (and passwords) is verified and new PINs are encrypted in such a way that unencrypted PINs and keys are not exposed outside the Message Security component 380. Each SIM uses a different key for encrypting and decrypting messages. Verification that the appropriate key was used is taken as proof that a message originated on a particular mobile phone 302.

Messages are preferably delivered to the user's mobile phone SIM application as (binary) message programs. This provides a totally secured two-way communication channel, robust against such security threats as "spoofing" of the Account Manager Servers. However, in some cases, SIM card applications are prevented from receiving such SMS messages while menus are being displayed on the screen of the mobile phone 302. In such cases, the system can be configured such that messages sent from the server are sent to SIMs as plain text messages.

In one embodiment, the Message Security component 380 is a COM+ component running as a standalone COM+ server application. In addition to decrypting and decoding messages received from the SIM application and encrypting messages to be sent to the SIM application, the component 380 provides methods for obtaining date and generation information associated with an encrypted PIN; obtaining date and purpose information associated with an encrypted item; encrypting master keys; generating a SIM specific key according to a predefined master key algorithm; encrypting passwords; and verifying passwords against encrypted passwords.

The component 380 uses COM+ role security to limit particular interface methods to particular users. For example, only the service operator can decrypt and encrypt messages for the funds transaction SIM application but the web account user 370 can create PINs.

The particular encryption scheme adopted is selected in accordance with the capabilities of the SIMs used. It is however preferred that all SIMs share a single public key (provided the SIMs support public key encryption). Where this is not possible a SIM specific key may instead be generated from a single shared symmetric key and ID information unique to the SIM. In the latter case, the reliability of the security depends upon the secrecy of the shared symmetric key.

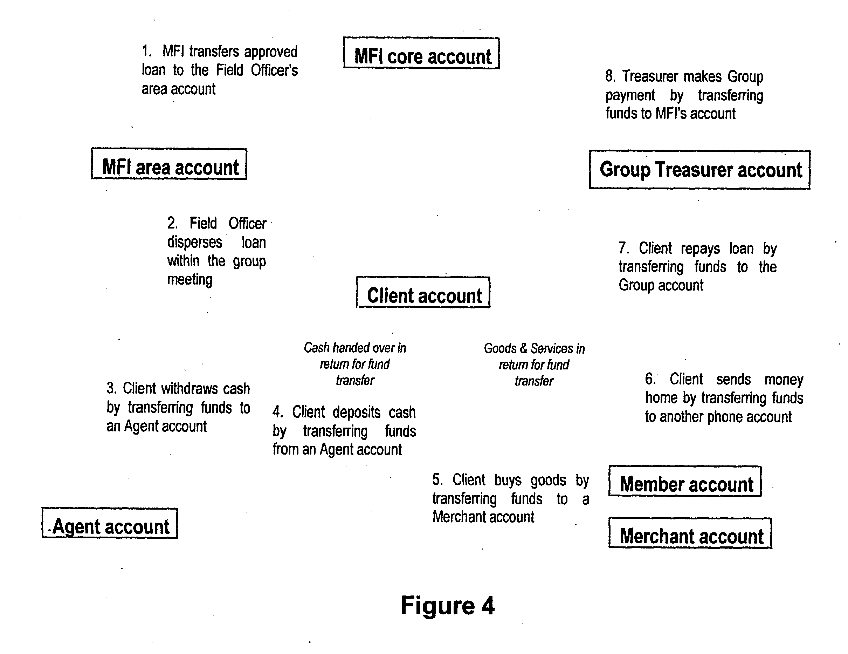

As an example of the inherent flexibility of the Account Manager solution,the inventive system has been configured to support the operation of a microfinance institution, MFI. Figure 4 illustrates the stages in the operation of this embodiment of the invention. The MFI maintains a core virtual account in the Data Centre. In addition, virtual accounts are provided for different roles within a microfinance scheme: field officers, who distribute small loans within communities; clients, virtual account holders who receive loans from the MFI; and group treasurers, whose job it is to verify that loans are being repaid correctly.

When the MFI approves the release of funds for distribution as loans by a field officer, a suitable SMS transaction message is sent. The SMS transaction message effects transfer of funds to the field officer's account. The field officer in turn disperses loans within a group of client accounts. The client accounts are credited with an approved sum, again using an SMS transaction message.

Clients of a particular MFI agree to repay their loan by transferring funds at a pre-determined rate to the account of the group treasurer. This activity is also effected by exchange of secure SMS messages. Finally the group treasurer, once he is satisfied that the correct repayments have been made, transfers the appropriate sum back to the core account of the MFI.

The system of the invention provides two-way secure communication to the SIM via SMS transaction messages. A unique key is provided for each SIM. The system therefore provides complete transparency in terms of which SIM initiates which transaction, facilitating audit and other regulatory functions.

The interface operating on each enabled handset includes an "interpreter". The interpreter is an application similar to a browser. In the above embodiments, each SMS transaction message requesting an account management transaction is constructed through the use of a dialog menu presented by the interpreter, in which the customer is asked to indicate: the target account, the value to be transferred (or withdrawn), the date of transfer and to input security data for authentication. The interpreter is fully customisable over the air. Menus, even the language displayed, can be changed remotely. Each menu item action is effected by a respective mini-programme (for example, Java script running on the browser or an applet). The interface is, furthermore, responsive to server driven events.

The system provides for the different requirements of users of the system. Depending upon the role of the user (e.g. user, agent, treasurer, field officer), the system can be customised with appropriate menus and options. Such updates are conveniently effected by over-the-air updates.

Once generated and sent, the text message is received at a first short message service centre (SMSC), the SMSC is coupled to the switched network environment by means of an SMSC gateway. The SMS transaction message is then transferred by the SMS service across the switched network environment to a transaction processor which interprets the SMS transaction message and, once the SMS has been authenticated, alters the data representing each account affected by the SMS transaction message accordingly, the data being stored in a data centre.

Using the interpreter (with this optional feature enabled), the user is presented with an account inbox, separate from the conventional SMS inbox, whereby he can maintain a transaction history. The account inbox is only accessible through the authentication functionality of the SIM inserted in the handset, so the integrity of the transaction history is assured by SIM authentication.

To confirm the completion of a given transaction, a corresponding transaction completed message is then generated for each account affected by the transaction and the transaction completed message is then encapsulated in an encrypted message which can only be opened correctly by a mobile terminal having a SIM card with the correct decryption key. Effectively the transaction completed message is electronically signed with a key specific to the SIM. The encrypted messages are formatted as SMS messages and delivered via the SMS service to the transaction requesting party and the account owner of the affected account. These SMS messages are delivered to the account inboxes for the respective accounts, so that only the verified user of the SIM can view the transaction status.

In the case where more than one user has access to the handset and a single SIM is shared, further ID and security information may be required. Access provided is then limited to a corresponding account inbox, inaccessible to other users but stored on the SIM nonetheless.

Preferably, Short Message Service Centres (SMSC) upon which the account manager operates, are customisable, in particular in terms of the duration of delay in forwarding any SMS. The service is expandable (supporting multiple SMSCs) and scaleable (storing different phone numbers on the same SMSC, thereby allowing more than one microfinance institution).

The service is preferably also implemented so that it is agnostic with respect to the network infrastructure bearing the transaction messages. A significant capability for the implementation is the ability to remotely host the Servers.

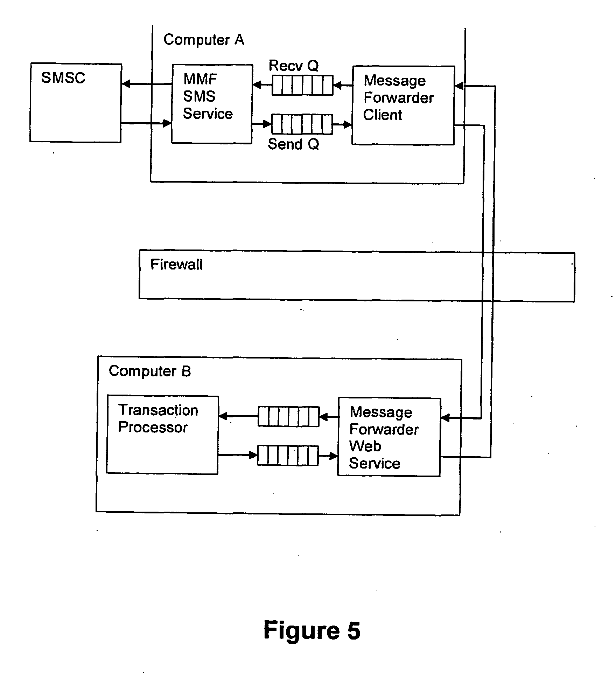

In some implementations, firewall restrictions limit the number of network locations where simultaneous access can be obtained to more than one SMSC. This short-coming can be addressed by implementing a utility application, a message forwarder (see Fig 5), for forwarding MQ messages from a message queue on one computer to the message queue on another computer using protocols that are adapted to cross such firewalls. Since communication between the Transaction Processor 340 and the SMSC 310,320 starts with MQ messages, this utility enables the system to be located elsewhere. Consider the situation when a first data network only allows outgoing connections. In order that the Transaction Processor may be hosted outside the first data network (but still having access to the SMSC of that first data network), the message forwarder must be capable of sending and receiving MQ messages across the firewall preventing incoming connections.

The Message Forwarder consists of two parts, a web service and a client implemented as, for example, a Windows NT Service. The client runs on the computer within the firewall (Computer A) and initiates all calls to the web service running on Computer B. Since web service calls use HTTP, this is allowed. Figure 5 shows how the parts interconnect.

Conveniently, the system is capable of imposing cost-based routing policies ensuring that SMS transaction messages are routed according to predetermined criteria, such as lowest financial cost, shortest distance, or fastest service. In preferred embodiments, the system imposes policies that are updated dynamically, thereby ensuring that the operator can provide the service at least cost. Often, a local mobile service provider will be used for Inbound SMS messages. Primarily, this permits the provision of SMS services that are cost-free for the user. This does also keep costs of SMS traffic low.

Clearly, where price of SMS traffic is less important, there is little restriction on the geographical location: the platform could be implemented and run from anywhere in the world. Roaming access to such services may be provided, where costs are not prohibitive.

For international applications, the database and logic of the virtual account manager are preferably provided with extension applications to cater for currency conversions, language and regulatory differences (e.g. anti-fraud measures).

The architecture of the system means that one-to-many transactions are relatively simple to implement: thus, for example, a single agent transaction can be used to top up three separate virtual accounts.

It is preferred that the Transaction Processor is provided with an SMS multiplexer facility that determines which of several possible SMSCs should be used to deliver any given SMS message.

In addition to facility for handling transaction request from user SIMs and from website access, the Transaction Manager also conveniently has a facility for handling requests for airtime from prepay customers (either for the user himself or on behalf of another user and/or phone). Such requests could originate from within the transaction application menu or from access to a suitable webpage.

In a further enhancement of the invention, the system may request or infer the physical location of the user. With this location information (e.g. the Cell ID), the system can ensure that information provided to the user is relevant to that user's physical context. This allows handsets to be used as a community building tool - advertising locally available resources, etc.

## Claims

1. A mobile-phone enabled account management system for maintaining a plurality of virtual accounts in a cellular communications system, the cellular communications system for carrying messages between mobile terminals (302, 304,306) and each mobile terminal including a data card with a unique identifier, the account management system including:
a messaging means (330) which is adapted to receive incoming transaction messages from mobile terminals using the communications system, the incoming messages including the unique identifier of the originating mobile terminal, and to transmit outgoing transaction messages to mobile terminals in response;
a transaction processor (340) which is coupled to the messaging means via a pair of message queues (332,334) and adapted to interpret incoming transaction messages and to output corresponding transaction instructions;
a message security means (380), coupled to the transaction processor (340), which authenticates the incoming transaction messages by comparing the included unique identifier to the entries in a list of valid virtual accounts; and
a transaction data store interface, coupled to the transaction processor (340), through which the transaction processor communicates with a data store (350), the interface being adapted to convey instructions to amend data held in one or more valid virtual accounts stored in the data store and to convey transaction complete messages from the data store to the transaction processor (340) when the amendment is complete;
wherein the message queues (332,334) include a receive queue and a send queue, the receive queue being adapted to queue messages received from the transaction processor (340) and the send queue being adapted to queue messages sent to the transaction processor (340);
wherein the transaction processor (340) is also adapted to interpret transaction complete messages and to output corresponding interpreted transaction complete messages to the messaging means (330) via the receive queue;
wherein each interpreted transaction complete message includes security information generated from unique identifiers of amended virtual accounts, the messaging means being adapted to direct outgoing messages generated from the interpreted transaction complete messages to corresponding mobile terminals; and
wherein each received outgoing message is in a format which requires the input of a unique key from the data card inserted in the mobile terminal, thereby ensuring that the outgoing message can only be read in the presence of a data card with a unique key that matches the security information in the outgoing message.

2. A system as claimed in claim 1, wherein the transaction processing means further includes a reporting component for providing a reporting functionality such that movement of value between the virtual accounts is tracked.

3. A system as claimed in claim 1 or claim 2, wherein the transaction processing means provides a plurality of virtual accounts, each account representing one of a number of distinct roles within a microfinance scheme.

4. A system as claimed in any one of claims 1 to 3, wherein the transaction processing means has additional functionality and wherein remote access to the additional functionality is further protected by requiring the establishment of a virtual private network.

5. A system as claimed in any one of claims 1 to 4, wherein the messaging means is adapted to receive incoming transaction messages directly from an SMSC component of the communications system.

6. A system as claimed in any one of claims 1 to 4, wherein the messaging means is adapted to receive incoming transaction messages from a short message entity, which is adapted to intercept incoming transaction messages from the cellular communications system and to deliver the incoming transaction messages over an internet interface.

7. A system as claimed in either of claims 5 or 6, wherein the route taken by each incoming transaction messages is determined on a cost-basis in accordance with a predetermined set of cost criteria.

8. A system as claimed in claim 7, wherein the criteria are updated dynamically in response to changes in cost.

9. A microfinance system comprising:
the account management system of any one of claims 1 to 8; and
a mobile phone handset (302) arranged to enable the account management system.

10. A mobile-phone enabled method for maintaining a plurality of virtual accounts in a cellular communications system, the cellular communications system carrying messages between mobile terminals and each mobile terminal including a data card with a unique identifier, the method comprising:
receiving incoming transaction messages from mobile terminals using the communications system, the incoming messages including the unique identifier of the originating mobile terminal;
queuing the incoming messages;
interpreting incoming transaction messages;
authenticating the incoming transaction messages by comparing the included unique identifier to the entries in a list of valid virtual accounts;
where the incoming transaction messages is authentic, outputting corresponding transaction instructions to amend data held in one or more valid virtual accounts stored in a data store;
receiving transaction complete messages from the data store when the amendment is complete;
queuing transaction complete messages; and
transmitting outgoing, queued, transaction messages to the originating mobile terminals, each interpreted transaction complete message including security information generated from unique identifiers of amended virtual accounts;
wherein each received outgoing message is in a format which requires the input of a unique key from the data card inserted in the mobile terminal, thereby ensuring that the outgoing message can only be read in the presence of a data card with a unique key that matches the security information in the outgoing message.

11. A method for performing a transaction in a microfinance system, the method comprising:
the method of claim 10; and
a method for operating a mobile phone handset (302) arranged to enable the method of claim 10, the method for operating the mobile phone handset (302) including:
providing a customisable interpreter application;
using the interpreter application to render menus for display on the mobile phone (302);
accepting input transaction information via the menus;
generating incoming transaction messages in accordance with the input transaction information;
transmitting the incoming transaction messages to the system;
receiving outgoing transaction messages from the system; and
displaying confirmation of the completion of transaction on the mobile handset (302).

12. The method of claim 11, wherein, in the method for operating a mobile phone handset (302), the step of rendering a menu for display includes the step of receiving a menu message and adapting the menu in response to the contents of the menu message, thereby customising the menu for the different requirements of users of the system.

13. The method of claim 12, wherein, in the method for operating a mobile phone handset (302), the menu message is received as an over-the-air update.

14. The method of claim 12 or 13, wherein the method for operating a mobile phone handset (302) further comprises determining the physical location of the handset and generating location based information, wherein the menu message includes location based information appropriate to the physical location of the handset.

15. The method of any one of claims 11 to 14, wherein, in the method for operating a mobile phone handset (302), the step of accepting input transaction information, includes:
presenting a dialog menu to the user;
prompting the user to input transaction information; and
storing the input transaction information in a format suitable for processing into a transaction message.

16. The method of claim 15, wherein, in the method for operating a mobile phone handset (302), the input transaction information includes information identifying one or more of the following parameters: the target account; the value to be transferred; the date of transfer; the value to be withdrawn; the date of withdrawal; and security data for authentication.

17. The method of claims 11 to 16, wherein, in the method for operating a mobile phone handset (302), the step of accepting input transaction information includes a preliminary step of authenticating the attempt to access a given account inbox by means of the authentication functionality of the data card inserted in the mobile telephone handset, whereby the integrity of the transaction history is assured by SIM authentication.

18. The method of claim 17, wherein, in the method for operating a mobile phone handset (302), the authentication step includes: prompting the user to speak into a microphone provided on the handset; recording a voice input; and comparing the voice input with a verified user voice sample; and confirming the voice as that of the user, thereby authenticating the user with voice recognition.

## Patentansprüche

1. Mobiltelefon-fähiges Kontenverwaltungssystem zum Führen mehrerer virtueller Konten in einem Mobilfunksystem, wobei das Mobilfunksystem zum Übertragen von Nachrichten zwischen Mobilfunkendgeräten (302, 304, 306) dient und jedes Mobilfunkendgerät eine Datenkarte mit einer eindeutigen Kennung aufweist, wobei das Kontenverwaltungssystem Folgendes beinhaltet:
ein Messaging-Mittel (330) zum Empfangen eingehender Transaktionsnachrichten von Mobilfunkendgeräten mit dem Kommunikationssystem, wobei die eingehenden Nachrichten die eindeutige Kennung des Ausgangs-Mobilfunkendgeräts beinhalten, und zum Senden abgehender Transaktionsnachrichten zu Mobilfunkendgeräten als Reaktion;
einen Transaktionsprozessor (340), der mit dem Messaging-Mittel über ein Paar Nachrichtenwarteschlangen (332, 334) gekoppelt und so gestaltet ist, dass er eingehende Transaktionsnachrichten interpretiert und entsprechende Transaktionsbefehle ausgibt;
ein Nachrichtensicherheitsmittel (380), das mit dem Transaktionsprozessor (340) gekoppelt ist und die eingehenden Transaktionsnachrichten durch Vergleichen der enthaltenen eindeutigen Kennung mit den Einträgen in einer Liste von gültigen virtuellen Konten authentifiziert; und
eine Transaktionsdatenspeicherschnittstelle, die mit dem Transaktionsprozessor (340) gekoppelt ist, durch die der Transaktionsprozessor mit einem Datenspeicher (350) kommuniziert, wobei die Schnittstelle die Aufgabe hat, Befehle zum Ändern von Daten zu senden, die in einem oder mehreren in dem Datenspeicher gespeicherten gültigen virtuellen Konten geführt werden, und Transaktion-Abgeschlossen-Nachrichten vom Datenspeicher zum Transaktionsprozessor (340) zu übertragen, wenn die Änderung abgeschlossen ist;
wobei die Nachrichtenwarteschlangen (332, 334) eine Empfangswarteschlange und eine Sendewarteschlange beinhalten, wobei die Empfangswarteschlange so ausgelegt ist, dass sie vom Transkationsprozessor (340) empfangene Nachrichten in eine Warteschlange einreiht, und die Sendewarteschlange so ausgelegt ist, dass sie zum Transaktionsprozessor (340) gesendete Nachrichten in eine Warteschlange einreiht;
wobei der Transaktionsprozessor (340) auch die Aufgabe hat, Transaktion-Abgeschlossen-Nachrichten zu interpretieren und entsprechende interpretierte Transaktion-Abgeschlossen-Nachrichten über die Empfangswarteschlange an das Messaging-Mittel (330) auszugeben;
wobei jede interpretierte Transaktion-Abgeschlossen-Nachricht Sicherheitsinformationen beinhaltet, die von eindeutigen Kennungen von geänderten virtuellen Konten erzeugt wurden, wobei das Messaging-Mittel so ausgelegt ist, dass es von den interpretierten Transaktion-Abgeschlossen-Nachrichten erzeugte abgehende Nachrichten zu entsprechenden Mobilfunkendgeräten leitet; und
wobei jede empfangene abgehende Nachricht in einem Format ist, das die Eingabe eines eindeutigen Schlüssels von der in das Mobilfunkendgerät eingeführten Datenkarte erfordert, um zu gewährleisten, dass die abgehende Nachricht nur in Anwesenheit einer Datenkarte mit einem eindeutigen Schlüssel gelesen werden kann, der mit den Sicherheitsinformationen in der abgehenden Nachricht übereinstimmt.

2. System nach Anspruch 1, wobei das Transaktionsverarbeitungsmitel ferner eine Berichtskomponente zum Bereitstellen einer Berichtsfunktionalität beinhaltet, so dass Wertebewegungen zwischen den virtuellen Konten verfolgt werden.

3. System nach Anspruch 1 oder Anspruch 2, wobei das Transaktionsverarbeitungsmittel mehrere virtuelle Konten bereitstellt, wobei jedes Konto eine aus einer Reihe von separaten Rollen in einem Mikrofinanzschema repräsentiert.

4. System nach einem der Ansprüche 1 bis 3, wobei das Transaktionsverarbeitungsmittel zusätzliche Funktionalität hat und wobei Fernzugang zu der zusätzlichen Funktionalität ferner dadurch geschützt wird, dass der Aufbau eines virtuellen Privatnetzes verlangt wird.

5. System nach einem der Ansprüche 1 bis 4, wobei das Messaging-Mittel so ausgelegt ist, dass es eingehende Transaktionsnachrichten direkt von einer SMSC-Komponente des Kommunikationssystems empfängt.

6. System nach einem der Ansprüche 1 bis 4, wobei das Messaging-Mittel so ausgelegt ist, dass es eingehende Transaktionsnachrichten von einer Kurznachrichtenentität empfängt, die so ausgelegt ist, dass sie eingehende Transaktionsnachrichten von dem Funkkommunikationssystem abfängt und die eingehenden Transaktionsnachrichten über eine Internet-Schnittstelle liefert.

7. System nach Anspruch 5 oder 6, wobei die von jeder eingehenden Transaktionsnachricht durchlaufene Route auf einer Kostenbasis gemäß einem vorbestimmten Satz von Kostenkriterien ermittelt wird.

8. System nach Anspruch 7, wobei die Kriterien dynamisch als Reaktion auf Kostenänderungen aktualisiert werden.

9. Mikrofinanzsystem, das Folgendes umfasst:
das Kontenverwaltungssystem nach einem der Ansprüche 1 bis 8; und
ein Mobiltelefon (302) zum Aktivieren des Kontenverwaltungssystems.

10. Mobiltelefon-fähiges Verfahren zum Führen mehrerer virtueller Konten in einem Funkkommunikationssystem, wobei das Funktelekommunikationssystem Nachrichten zwischen Mobilfunkendgeräten überträgt und jedes Mobilfunkendgerät eine Datenkarte mit einer eindeutigen Kennung beinhaltet, wobei das Verfahren Folgendes beinhaltet:
Empfangen eingehender Transaktionsnachrichten von Mobilfunkendgeräten mit dem Kommunikationssystem, wobei die eingehenden Nachrichten die eindeutige Kennung des Ausgangs-Mobilfunkendgeräts beinhalten;
Einreihen der eingehenden Nachrichten in eine Warteschlange;
Interpretieren eingehender Transaktionsnachrichten;
Authentifizieren der eingehenden Transaktionsnachrichten durch Vergleichen der enthaltenen eindeutigen Kennung mit den Einträgen in einer Liste von gültigen virtuellen Konten;
wo die eingehenden Transaktionsnachrichten authentisch sind:
Ausgeben entsprechender Transaktionsbefehle zum Ändern von Daten in einem oder mehreren in einem Datenspeicher gespeicherten gültigen virtuellen Konten;
Empfangen von Transaktion-Abgeschlossen-Nachrichten von dem Datenspeicher, wenn die Änderung abgeschlossen ist;
Einreihen von Transaktion-Abgeschlossen-Nachrichten in eine Warteschlange; und
Übertragen abgehender Transaktionsnachrichten in der Warteschlange zu den Ausgangs-Mobilfunkendgeräten, wobei jede interpretierte Transaktion-Abgeschlossen-Nachricht Sicherheitsinformationen beinhaltet, die von eindeutigen Kennungen von geänderten virtuellen Konten erzeugt werden;
wobei jede empfangene abgehende Nachricht in einem Format vorliegt, das die Eingabe eines eindeutigen Schlüssels von der in das Mobilfunkendgerät eingeführten Datenkarte verlangt, um dadurch zu gewährleisten, dass die abgehende Nachricht nur in Anwesenheit einer Datenkarte mit einem eindeutigen Schlüssel gelesen werden kann, der mit den Sicherheitsinformationen in der abgehenden Nachricht übereinstimmt

11. Verfahren zum Durchführen einer Transaktion in einem Mikrofinanzsystem, wobei das Verfahren Folgendes beinhaltet:
das Verfahren nach Anspruch 10; und
ein Verfahren zum Betreiben eines Mobiltelefons (302) zum Ermöglichen des Verfahrens nach Anspruch 10, wobei das Verfahren zum Betreiben des Mobiltelefons (302) Folgendes beinhaltet:
Bereitstellen einer kundenspezifisch anpassbaren Interpreter-Anwendung;
Benutzen der Interpreter-Anwendung zum Rendern von Menüs zur Anzeige auf dem Mobiltelefon (302);
Akzeptieren von eingegebenen Transaktionsinformationen über die Menüs;
Erzeugen eingehender Transaktionsnachrichten gemäß den eingegebenen Transaktionsinformationen;
Übertragen der eingehenden Transaktionsnachrichten zu dem System;
Empfangen abgehender Transaktionsnachrichten von dem System; und
Anzeigen einer Bestätigung des Abschlusses einer Transaktion auf dem Mobiltelefon (302).

12. Verfahren nach Anspruch 11, wobei in dem Verfahren zum Betreiben eines Mobiltelefons (302) der Schritt des Renderns eines Menüs zur Anzeige den Schritt des Empfangens einer Menünachricht und des Adaptierens des Menüs als Reaktion auf den Inhalt der Menünachricht beinhaltet, um dadurch das Menü für die verschiedenen Anforderungen von den Benutzern des Systems kundenspezifisch anzupassen.

13. Verfahren nach Anspruch 12, wobei in dem Verfahren zum Betreiben eines Mobiltelefons (302) die Menünachricht als Over-the-Air-Update empfangen wird.

14. Verfahren nach Anspruch 12 oder 13, wobei das Verfahren zum Betreiben eines Mobiltelefons (302) ferner das Ermitteln des physischen Orts des Telefons und des Erzeugens von ortsgestützten Informationen beinhaltet, wobei die Menünachricht für den physischen Ort des Telefons angemessene ortsgestützte Informationen beinhaltet.

15. Verfahren nach einem der Ansprüche 11 bis 14, wobei in dem Verfahren zum Betreiben eines Mobiltelefons (302) der Schritt des Akzeptierens eingegebener Transaktionsinformationen Folgendes beinhaltet:
Präsentieren eines Dialog-Menüs dem Benutzer;
Auffordern des Benutzers zur Eingabe von Transaktionsinformationen; und
Speichern der eingegebenen Transaktionsinformationen in einem zur Verarbeitung geeigneten Format in einerTransaktionsnachricht.

16. Verfahren nach Anspruch 15, wobei in dem Verfahren zum Betreiben eines Mobiltelefons (302) die eingegebenen Transaktionsinformationen Informationen beinhalten, die einen oder mehrere der folgenden Parameter identifizieren: das Zielkonto; den zu übertragenden Wert; das Übertragungsdatum; den abzuhebenden Wert; das Datum des Abhebens; und Sicherheitsdaten zur Authentifizierung.

17. Verfahren nach den Ansprüchen 11 bis 16, wobei in dem Verfahren zum Betreiben eines Mobiltelefons (302) der Schritt des Akzeptierens von eingegebenen Transaktionsinformationen einen Vorabschritt des Authentifizierens des Versuchs zum Zugreifen auf eine gegebene Konto-Inbox mittels der Authentifikationsfunktionalität der in das Mobiltelefon eingeführten Datenkarte beinhaltet, so dass die Integrität der Transaktionshistorie durch SIM-Authentifizierung gewährleistet wird.

18. Verfahren nach Anspruch 17, wobei in dem Verfahren zum Betreiben eines Mobiltelefons (302) der Authentifizierungsschritt Folgendes beinhaltet: Auffordern des Benutzers zum Sprechen in ein am Gerät vorgesehenes Mikrofon; Aufzeichnen einer Spracheingabe; und Vergleichen der Spracheingabe mit einer verifizierten Benutzersprachprobe; und Bestätigen der Sprache als die des Benutzers, um dadurch den Benutzer durch Spracherkennung zu authentifizieren.

## Revendications

1. Système de gestion de compte intégré à un téléphone mobile pour actualiser une pluralité de comptes virtuels dans un système de communications cellulaires, le système de communications cellulaires servant à acheminer des messages entre des terminaux mobiles (302, 304, 306) et chaque terminal mobile englobant une carte de données laquelle possède un identifiant inédit, le système de gestion de compte comportant :
des moyens de messagerie (330) qui sont conçus pour recevoir des messages de transaction entrants provenant de terminaux mobiles utilisant le système de communications, les messages entrants englobant l'identifiant inédit du terminal mobile expéditeur, et pour transmettre, en réaction, des messages de transaction sortants vers des terminaux mobiles ;
un processeur de transactions (340) qui est couplé aux moyens de messagerie par l'intermédiaire d'une paire de files d'attente de messages (332, 334) et conçu pour interpréter des messages de transaction entrants et pour produire des instructions de transaction correspondantes ;
des moyens sécuritaires de messages (380), couplés au processeur de transactions (340), lesquels authentifient les messages de transaction entrants en comparant l'identifiant inédit inclus aux entrées figurant dans une liste de comptes virtuels valides ; et
une interface à mémoire de données de transaction, couplée au processeur de transactions (340), par le biais de laquelle le processeur de transactions communique avec une mémoire de données (350), l'interface étant conçue pour acheminer des instructions visant à modifier des données conservées dans un ou plusieurs comptes virtuels valides stockés dans la mémoire de données, et pour acheminer des messages de terminaison de transaction à partir de la mémoire de données vers le processeur de transactions (340) lorsque la modification est achevée ;
cas dans lequel les files d'attente de messages (332, 334) comportent une file d'attente Réception et une file d'attente Envoi, la file d'attente Réception étant conçue pour mettre en file d'attente des messages reçus à partir du processeur de transactions (340) et la file d'attente Envoi étant conçue pour mettre en file d'attente des messages envoyés vers le processeur de transactions (340) ;
cas dans lequel le processeur de transactions (340) est également conçu pour interpréter des messages de terminaison de transaction et pour produire des messages correspondants de terminaison de transaction interprétés vers les moyens de messagerie (330) par l'intermédiaire de la file d'attente Réception ;
cas dans lequel chaque message de terminaison de transaction interprété englobe des informations sécuritaires générées à partir d'identifiants inédits de comptes virtuels modifiés, les moyens de messagerie étant conçus pour canaliser les messages sortants générés à partir des messages de terminaison de transaction interprétés vers des terminaux mobiles correspondants ; et
cas dans lequel chaque message sortant reçu se présente sous un format qui exige la saisie d'une clé inédite à partir de la carte de données insérée dans le terminal mobile, ce qui permet par conséquent de garantir que le message sortant peut uniquement être lu en présence d'une carte de données avec une clé inédite laquelle concorde avec les informations sécuritaires figurant dans le message sortant.

2. Système selon la revendication 1, les moyens de traitement de transactions comportant en outre un composant de compte rendu pour procurer une fonctionnalité de compte rendu de sorte que tout mouvement de valeur entre les comptes virtuels fasse l'objet d'un suivi.

3. Système selon la revendication 1 ou la revendication 2, les moyens de traitement de transactions offrant une pluralité de comptes virtuels, chaque compte représentant un rôle, parmi un certain nombre de rôles distincts, dans le cadre d'un plan de microfinancement.

4. Système selon l'une quelconque des revendications 1 à 3, les moyens de traitement de transactions possédant une fonctionnalité supplémentaire, et cas dans lequel l'accès à distance à la fonctionnalité supplémentaire est protégé encore davantage en raison de la nécessité d'établir un réseau privé virtuel.

5. Système selon l'une quelconque des revendications 1 à 4, les moyens de messagerie étant conçus pour recevoir directement des messages de transaction entrants en provenance d'un composant SMSC du système de communications.

6. Système selon l'une quelconque des revendications 1 à 4, les moyens de messagerie étant conçus pour recevoir des messages de transaction entrants en provenance d'une entité de messages courts, laquelle est conçue pour intercepter des messages de transaction entrants en provenance du système de communications cellulaires et pour délivrer les messages de transaction entrants via une interface internet.

7. Système selon l'une ou l'autre des revendications 5 ou 6, le trajet emprunté par chacun des messages de transaction entrants étant déterminé sur une base de coûts, en conformité avec un ensemble prédéterminé de critères portant sur les coûts.

8. Système selon la revendication 7, les critères étant mis à jour de façon dynamique en réaction à des changements opérés dans les coûts.

9. Système de microfinancement comprenant:
le système de gestion de compte selon l'une quelconque des revendications 1 à 8 ; et
un combiné de téléphone mobile (302) agencé pour supporter le système de gestion de compte.

10. Procédé intégré à un téléphone mobile pour actualiser une pluralité de comptes virtuels dans un système de communications cellulaires, le système de communications cellulaires servant à acheminer des messages entre des terminaux mobiles, et chaque terminal mobile englobant une carte de données laquelle possède un identifiant inédit, le procédé comprenant les opérations consistant à :
recevoir des messages de transaction entrants provenant de terminaux mobiles utilisant le système de communications, les messages entrants englobant l'identifiant inédit du terminal mobile expéditeur ;
mettre en file d'attente les messages entrants ;
interpréter les messages de transaction entrants ;
authentifier les messages de transaction entrants en comparant l'identifiant inédit inclus aux entrées figurant dans une liste de comptes virtuels valides ;
dans les cas où les messages de transaction entrants sont authentiques, produire des instructions de transaction correspondantes visant à modifier des données conservées dans un ou plusieurs comptes virtuels valides stockés dans une mémoire de données ;
recevoir des messages de terminaison de transaction à partir de la mémoire de données lorsque la modification est achevée ;
mettre en file d'attente les messages de terminaison de transaction ; et
transmettre les messages de transaction sortants, mis en file d'attente, vers les terminaux mobiles expéditeurs, chaque message de terminaison de transaction interprété englobant des informations sécuritaires générées à partir d'identifiants inédits de comptes virtuels modifiés ;
cas dans lequel chaque message sortant reçu se présente sous un format qui exige la saisie d'une clé inédite à partir de la carte de données insérée dans le terminal mobile, ce qui permet par conséquent de garantir que le message sortant peut uniquement être lu en présence d'une carte de données avec une clé inédite laquelle concorde avec les informations sécuritaires figurant dans le message sortant.

11. Procédé destiné à réaliser une transaction dans un système de microfinancement, le procédé comprenant :
le procédé selon la revendication 10 ; et
un procédé pour exploiter un combiné de téléphone mobile (302) agencé pour supporter le procédé selon la revendication 10, le procédé pour exploiter le combiné de téléphone mobile (302) comportant les opérations consistant à :
mettre à disposition une application d'interprétation personnalisable ;
utiliser l'application d'interprétation pour fournir des menus en vue d'un affichage sur le téléphone mobile (302) ;
accepter des informations de transaction saisies par l'intermédiaire des menus ;
générer des messages de transaction entrants en conformité avec les informations de transaction saisies ;
transmettre au système les messages de transaction entrants ;
recevoir des messages de transaction sortants en provenance du système ; et
afficher, sur le combiné du mobile (302), la confirmation de la terminaison de la transaction.

12. Procédé selon la revendication 11, lors du procédé destiné à exploiter un combiné de téléphone mobile (302), l'étape de fourniture d'un menu en vue d'un affichage comportant l'étape consistant à recevoir un message de menu et à adapter le menu en réaction au contenu du message de menu, ce qui permet par conséquent de personnaliser le menu pour satisfaire aux différentes exigences des utilisateurs du système.

13. Procédé selon la revendication 12, lors du procédé destiné à exploiter un combiné de téléphone mobile (302), le message du menu étant reçu sous la forme d'une mise à jour par liaison radio.

14. Procédé selon la revendication 12 ou 13, le procédé destiné à exploiter un combiné de téléphone mobile (302) comprenant en outre les opérations consistant à déterminer la localisation physique du combiné et à générer des informations dépendantes de la localisation, cas dans lequel le message de menu englobe des informations dépendantes de la localisation qui sont appropriées à la localisation physique du combiné.

15. Procédé selon l'une quelconque des revendications 11 à 14, lors du procédé destiné à exploiter un combiné de téléphone mobile (302), l'étape d'acceptation des informations de transaction saisies comportant les opérations consistant à :
présenter à l'utilisateur un menu à dialogue ;
inviter l'utilisateur à saisir les informations de la transaction ; et
stocker les informations de transaction saisies sous un format adapté à être traité en message de transaction.

16. Procédé selon la revendication 15, lors du procédé destiné à exploiter un combiné de téléphone mobile (302), les informations de transaction saisies comportant des informations lesquelles ïdentifient un ou plusieurs des paramètres suivants : le compte cible ; la valeur devant être transférée ; la date du transfert ; la valeur devant être retirée ; la date du retrait; et des données sécuritaires en vue de l'authentification.

17. Procédé selon les revendications 11 à 16, lors du procédé destiné à exploiter un combiné de téléphone mobile (302), l'étape d'acceptation des informations de transaction saisies comportant une étape préliminaire visant à authentifier la tentative d'accéder à une boîte de réception de compte donnée grâce à la fonctionnalité d'authentification de la carte de données insérée dans le combiné de téléphone mobile, permettant ainsi de veiller à l'intégrité de l'historique des transactions en vertu de l'authentification SIM.

18. Procédé selon la revendication 17, lors du procédé destiné à exploiter un combiné de téléphone mobile (302), l'étape d'authentification englobant les opérations consistant à : inviter l'utilisateur à parler dans un microphone monté sur le combiné ; enregistrer une saisie vocale ; et comparer la saisie vocale à un échantillon vocal d'un utilisateur vérifié ; et confirmer la voix comme étant celle de l'utilisateur, ce qui permet par conséquent d'authentifier l'utilisateur à l'aide de la reconnaissance vocale.
